# EUROPEAN PATENT APPLICATION

(11) **EP 1 903 562 A2**
(43) Date of publication of application: **26.03.2008**
(21) Application number: 07018818.0
(22) Date of filing: 25.09.2007
(51) Int. Cl.: G11B 7/0037

(54) **Optical disk recording/drawing method**

(30) Priority: 25.09.2006 JP 2006258192
(71) Applicant: YAMAHA CORPORATION, Naka-ku Hamamatsu-shi Shizuoka-ken (JP)
(72) Inventor: Itoga, Hisanori, Hamamatsu-shi, Shizuoka-ken (JP); Yamada, Seiya, Hamamatsu-shi, Shizuoka-ken (JP)
(74) Representative: Wagner, Karl H.

(57) **Abstract**

A relationship between a length of a pixel formed by an image drawing operation along a disk circumferential direction, and a length of a pit formed by an data recording operation along the disk circumferential direction is set in such a manner that a plurality of pits are entered to the length of 1 pixel along the disk circumferential direction. While one pixel is being drawn by employing the image drawing beam, within such a section that the power of the data recording beam becomes recording power in order to form the pit, the power of the image drawing beam is temporarily lowered to such a power which does not change the visible light characteristic of the image drawing layer.

## Description

### BACKGROUND OF THE INVENTION

The present invention is related to a method for applying two optical beams from an objective lens of a single optical pickup to an optical disk where a data recording layer and an image drawing layer are superimposed with each other so that data is recorded on the data recording layer by one of the optical beams and an image is drawn (forming of visible image) on the image drawing layer by the other beam (will be referred to as "simultaneous recording/drawing" hereinafter). With this method, temperature increases of the optical pickup and of the optical disk are suppressed.

The following optical disk recording/drawing technique is described in JP-A-2005-346886. That is, an image drawing layer made of a thermal sensitive layer, a photosensitive layer, and the like is formed on a disk surface of such an optical disk as a recordable CD media and a recordable DVD media. An optical disk recording apparatus for recording data on a data recording layer of the above optical disk is commonly operated as an optical disk drawing apparatus so as to irradiate laser beam modulated in response to image data from an optical pickup onto the image drawing layer, so that an image is drawn on the image drawing layer. In the technical idea described in JP-A-2005-346886, two laser beams are emitted from a single optical pickup in a coaxial manner, one of these two laser beams is irradiated onto the data recording layer, and both a focusing control operation and a tracking control operation are carried out for the one so as to record data on the data recording layer, whereas the other laser beam is irradiated onto a predetermined position of the image drawing layer so as to draw an image thereon (namely, "simultaneous recording/image drawing" is carried out) in parallel to the data recording operation.

In the simultaneous recording/image drawing operation, while the data recording operation is being carried out by one of these optical beams, the image drawing operation is carried out by the other optical beam at the same time. As a result, as compared with such a case that a data recording operation and an image drawing operation are separately carried out, temperatures as to laser diodes and laser drivers of the optical pickup, and further, the optical disk are increased. Accordingly, there are risks that durability of components is deteriorated, and/or qualities of data recording are lowered.

### SUMMARY OF THE INVENTION

The present invention is made to solve the above-described conventional problems, and therefore, is to provide an optical disk recording/drawing method capable of suppressing temperature increases in laser diodes, laser drivers, an optical disk, and the like when simultaneous recording/drawing operation is carried out.

In order to achieve the object, the present invention provides the following arrangement.
(1) An optical disk recording/drawing method comprising:
   providing an optical disk that includes a data recording layer and an image drawing layer which are formed at a different position in a thickness direction of the optical disk;
   rotating the optical disk;
   applying a first beam through an objective lens of a single optical pickup to the optical disk so as to be focused on the data recording layer to form a pit on the data recording layer as a recording operation;
   applying a second beam through the objective lens to the optical disk so as to be focused on the image drawing layer and change a visible light characteristic of the image drawing layer to form a pixel on the image drawing layer as an image drawing, simultaneously with the recording operation,
   wherein when the data recording beam having power for forming the pit on the data recording layer is applied during the image drawing beam for forming the pixel of the image is applied, power of the image drawing beam is lowered from a first power that changes the visible light characteristic of the image drawing layer to a second power that does not changes the visible light characteristic of the image drawing layer during the image drawing beam forms a pixel of the image.
(2) The optical disk recording/drawing method according to (1),
   wherein a length of one pixel defined by image data in a disk circumferential direction is longer than a length of the plural pits formed by the first beam in the disk circumferential direction.
(3) The optical disk recording/drawing method according to (2) further comprising:
   encoding recording data for the recording operation to a recording format;
   embedding image data, having plural pixels for a predetermined unit section, in a predetermined empty area of the recording format to form a data recording signal;
   extracting the image data from the recording format; and
   equally distributing the plural pixels of the image data for the predetermined unit section over a disk circumferential direction length corresponding to a length of the predetermined unit section to form an image drawing signal,
   wherein within a section that the image drawing signal instructs to change the visible light characteristic of the image drawing layer to draw the pixel, instruction as to the image drawing signal is temporarily changed to another instruction for not changing the visible light characteristic of the image drawing layer at the time the data recording signal instructs to form the pit, and
   wherein the first beam is modulated based on the data recording signal to perform the data recording operation, and the second beam is modulated based on the image drawing signal which is modulated by the data recording signal so as to form the image.
(4) An optical disk recording/drawing apparatus for recording data and drawing an image on an optical disk that includes a data recording layer and an image drawing layer which are formed at a different position along a thickness direction of the optical disk, the apparatus comprising:
   a rotating unit that rotates the optical disk;
   an objective lens;
   a first laser diode that applies a first beam through an objective lens to the optical disk so as to be focused on the data recording layer, the first beam being capable of having a power for forming a pit on the data recording layer;
   a second laser diode that applies a second beam through the objective lens to the optical disk so as to be focused on the image drawing layer, the second beam being capable of having a power for changing a visible light characteristic of the image drawing layer; and
   a controller that controls the first and second laser diodes to perform a data recording operation and an image forming operation simultaneously,
wherein when the controller controls the first laser diode to apply the first beam having the power for forming the pit, the controller controls the second laser diode to temporality lower the power of the second beam so as not to change the visible light characteristic.

In accordance with the present invention, while one pixel is being drawn by employing the image drawing beam, within such a section that the power of the data recording beam becomes recording power in order to form the pit, the power of the image drawing beam is temporarily lowered to such a power which does not change the visible light characteristic of the image drawing layer. As a result, it is possible to avoid that the power of both the data recording beam and the image drawing beam becomes the high power at the same time. As a consequence, increases of temperatures as to a laser diode, a laser driver, an optical disk, and the like can be suppressed, so that it can suppress that durability of components is lowered and qualities of data recording operations are lowered. Also, in the present invention, the relationship between the length of the pixel formed by the image drawing operation along the disk circumferential direction, and the length of the pit formed by the data recording operation along the disk circumferential direction is set in such a manner that the plurality of pits are entered to the length of 1 pixel along the disk circumferential direction. Accordingly, lowering of the power of the image drawing beam constitutes a portion of the section during which 1 pixel is drawn, but the power of the image drawing beam is not lowered over the entire section during which 1 pixel is drawn. As a consequence, even when the power of the image drawing beam is temporarily lowered, it is possible to avoid that portions of the pixels are dropped when the image is drawn.

According to the present invention, the image data is embedded to the empty area of the data recording-purpose recording format so as to form the data recording signal. As a result, the encode process operation can be commonly carried out as to both the recording data and the image data, which may contribute that the circuit scale can be made compact.

### BRIEF DESCRIPTION OF THE DRAWINGS

Fig. 1 is an operating waveform diagram in respective portions indicated within a data modulating unit 66 of Fig. 6 when a simultaneous recording/drawing operation is carried out.
Fig. 2 is a diagram for showing an embodiment of layer structures of an optical disk which is used in an image drawing method of the present invention, namely a sectional view for schematically representing a portion of the optical disk constructed as an image drawable write-once type DVD, which is cut on a plane passing through a center axis thereof.
Fig. 3 is a block diagram for showing an embodiment of an optical disk recording apparatus equipped with a simultaneous recording/drawing function, which embodies the image drawing method of the present invention, while the optical disk 10 of Fig. 2 is utilized.
Fig. 4 is a circuit diagram for showing a detailed arrangement of the optical disk recording apparatus of Fig. 3.
Fig. 5 is a diagram for indicating a structure of a data frame based upon a DVD format.
Fig. 6 is a diagram for representing a structure of an ECC block based upon the DVD format.
Fig. 7 is a diagram for showing a recording frame constituted by interleaving the ECC block of Fig. 6.
Fig. 8 is a diagram for indicating a physical sector based upon the DVD format.
Fig. 9 is a diagram for schematically showing an array example of pixels which constitute one sheet of image which is drawn in an image drawing layer 22 of the optical disk 10.
Fig. 10 is a diagram for showing a waveform pattern of a synchronous code SY0 of a head of a physical sector contained in a data recording signal NRZI.
Fig. 11 is a diagram for representing a temporal relationship between the data recording signal NRZI and an image drawing signal DOTX.
Figs. 12A and 12B are time charts for representing sampling operations of laser power in an ALPC circuit 58 of Fig. 4.
Fig. 13 is a circuit diagram for showing another detailed arrangement of the optical disk recording apparatus of Fig. 3.
Figs. 14A and 14B are time charts for representing sampling operations of laser power in an ALPC circuit 58 of Fig. 13.
Fig. 15 is a flow chart for describing control contents executed by the optical disk apparatuses of Fig. 3, Fig. 4, and Fig. 13 when a simultaneous recording/drawing operation is carried out with respect to the optical disk of Fig. 2.
Fig. 16 is a diagram for schematically showing an array example of 1 pixel on an image drawing layer of an optical disk in the case that a size of 1 pixel along a disk radial direction is set to such a size having a plurality of track pitches by a wobble groove 14.

### DETAILED DESCRIPTION OF PREFERRED EMBODIMENTS

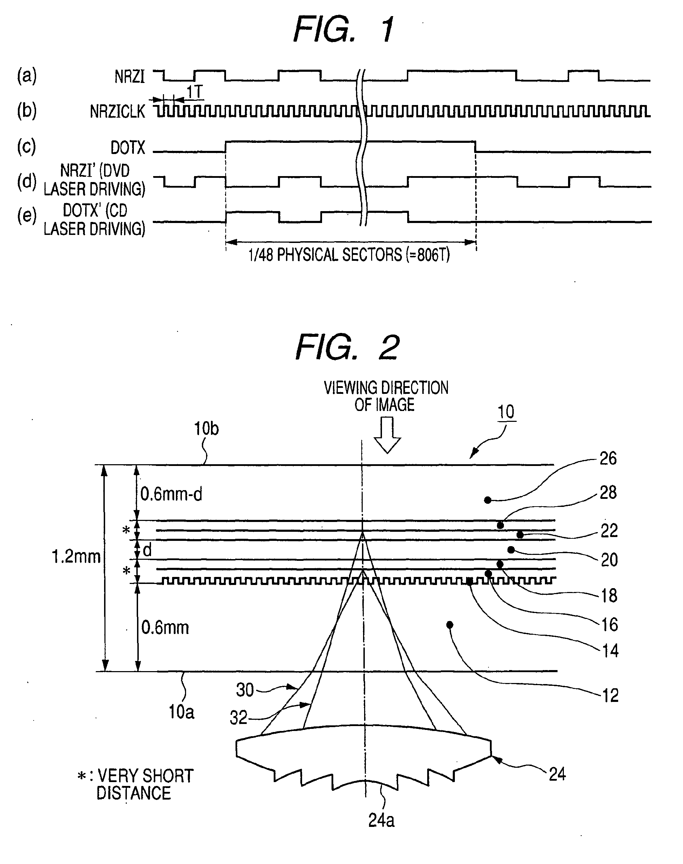

A description is made of embodiments according to the present invention. Firstly, Fig. 2 represents an embodiment of an optical disk 10 which is used in the image drawing method according to the present invention. This optical disk 10 is constructed as an image drawable write-once type DVD (namely, DVD-R, DVD+R etc.). In other words, the optical disk 10 is manufactured as follows: A data recording layer 16, a focusing control-purpose semi-transparent reflection layer 18, a transparent intermediate layer 20, and an image drawing layer 22 are sequentially formed on a surface of a polycarbonate board 12 having a thickness of 0.6 mm, while a wobble groove 14 is formed on this surface of the polycarbonate board 12. Then, the above-described polycarbonate 12 is joined to another polycarbonate board 26 having a thickness of 0.6 mm where no groove is formed by employing a transparent adhesive layer 28, so that the entire optical disk is formed in an integral disk structure having a thickness of 1.2 mm. The image drawing layer 22 corresponds to such a layer whose visible light characteristic is changed by being irradiated by laser beam. This image drawing layer 22 is made of a thermal sensitive material, a photosensitive material, and the like.

When the simultaneous recording/drawing operation of the optical disk 10 is carried out, both laser beam for DVD recording/reproducing (DVD-purpose laser beam) 30 modulated by a data recording signal and laser beam for CD recording/reproducing (CD-purpose laser beam) 32 modulated by an image drawing signal are simultaneously applied from an objective lens 24 of an optical pickup in a coaxial manner. Both the laser beams 30 and 32 are entered from one surface (will be referred to as "data surface" hereinafter) 10a; a data recording operation with respect to the data recording layer 16 is carried out by the DVD-purpose laser beam 30 while a focusing control operation (astigmatism method etc.) and a tracking control operation (push-pull method etc.) are carried out for the DVD-purpose laser beam 30, and an image drawing operation with respect to the image drawing layer 22 is carried out by the CD-purpose laser beam 32. A mutual positional relationship between focused positions of both the laser beam 30 and 32 is fixed within the optical disk 10 (namely, both focused positions are moved in integral manner). A hologram 24a is formed on a lower surface of the objective lens 24, and a distance between the focused positions of both the laser beam 30 and 32 within the optical disk 10 is set in advance in such a manner that this distance is made equal to a distance between the data recording layer 16 and the image drawing layer 22. As a consequence, if the DVD-purpose laser beam 30 is formed on the data recording layer 16 by performing a focusing control operation with respect to the data recording layer 16 (strictly speaking, with respect to semi-transparent reflection layer 18) by using the DVD-purpose laser beam 30, then the CD-laser beam 32 is also and necessarily brought into such a condition that the CD-purpose laser beam 32 is focused on the image drawing layer 22. Also, by carrying out a tracking control operation for the DVD-purpose laser beam 30 with respect to the wobble groove 14, the CD-purpose laser beam 32 is also sequentially and necessarily transported along a radial direction of the optical disk 10 in the track pitch defined by the wobble groove 14. As a result, the simultaneous recording/drawing operation can be realized. A visible image formed on the image drawing layer 22 by the simultaneous recording/drawing operation can be viewed from the side of the opposite-sided surface (will be referred to as "label surface" hereinafter) 10b of the data surface 10a. Also, data recorded on the data recording layer 16 can be reproduced by the DVD-purpose laser beam 30 having reproducing power.

### <EMBODIMENT OF OPTICAL DISK RECORDING APPARATUS>

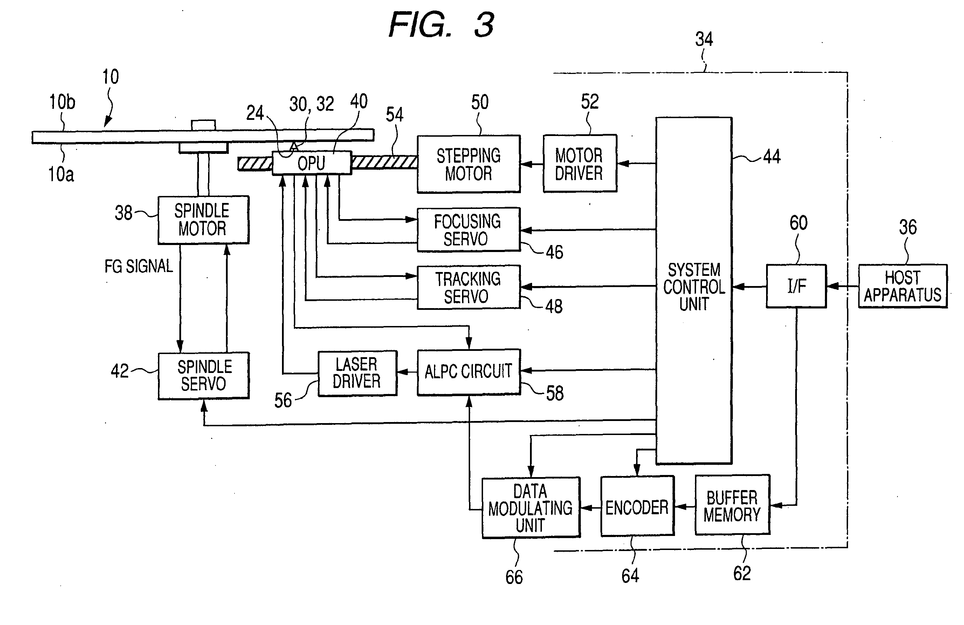

Fig. 3 shows an optical disk recording apparatus equipped with the simultaneous recording/drawing function, which executes the image drawing method according to the embodiment of the present invention. The optical disk recording apparatus is arranged by connecting an optical disk drive equipped with the image drawing function (in this case, DVD drive) 34 to a host apparatus (host computer) 36 under mutual communicating condition. The optical disk recording apparatus can be operated in the below-mentioned modes in response to sorts of optical disks:
(a) The optical disk 10 (image drawable write-once type DVD) of Fig. 2:
   Simultaneous recording/image drawing: While data is recorded on the data recording layer 16 by employing the DVD-purpose laser beam 30, an image is drawn on the image drawing layer 22 by employing the CD-purpose laser 32.
   Data recording of sole DVD: The CD-purpose laser beam 32 is turned OFF, and data is recorded on the data recording layer 16 by employing the DVD-purpose laser beam 30.
   · Sole image drawing: While both a focusing control operation and a tracking control operation are carried out with respect to the data recording layer 16 by employing the DVD-purpose laser beam 30 having the reproducing power, an image is drawn on the image drawing layer 22 by employing the CD-purpose laser beam 32.
   · DVD data reproducing: The CD-purpose laser beam 32 is turned OFF, and data of the data recording layer 16 is reproduced by employing the DVD-purpose laser beam 30 having the reproducing power.
(b) Existing recordable type, or reproduction-only DVD:
   DVD data recording: The CD-purpose laser 32 is turned OFF, and data is recorded by employing the DVD-purpose laser beam 30.
   DVD data reproducing: The CD-purpose laser beam 32 is turned OFF, and data is reproduced by employing the DVD-purpose laser beam 30 having the reproducing power.
(c) Existing recordable type, or reproduction-only CD:
   CD data recording: The DVD-purpose laser 30 is turned OFF, and data is recorded by employing the CD-purpose laser beam 32.
   CD data reproducing: The DVD-purpose laser beam 30 is turned OFF, and data is reproduced by employing the CD-purpose laser beam 32 having the reproducing power.
   It should be understood that the case where the optical disk apparatus is operated in the simultaneous recording/drawing operation when the optical disk (image drawable write-once type DVD) 10 shown in Fig. 2 is utilized will be mainly described.

The optical disk 10 is rotated by a spindle motor 38, both a DVD data recording operation and a DVD data reproducing operation are carried out by employing the DVD-purpose laser beam 30, and an image drawing operation is carried out by employing the CD-purpose laser beam 32. A spindle servo 42 controls the spindle motor 38 in a CLV (Constant Linear Velocity) control manner in response to an instruction issued from a system control unit (CPU) 44 during the data recording operations (simultaneous recording/image drawing operation and sole DVD data recording operation), and during the data reproducing operation. This CLV control operation is performed during the data recording operation based upon a PLL control mode in such a manner that a wobble signal detected from such a returned light of the DVD-purpose laser beam 30 is detected at a predetermined frequency. Also, this CLV control operation is performed during the data reproducing operation based upon the PLL control mode in such a manner that either a wobble signal detected from the returned light of the DVD-purpose laser beam 30 or a clock signal produced from the returned light of the DVD-purpose laser beam 30 is detected at a predetermined frequency.

During the simultaneous recording/image reproducing operation, a focus servo 46 drives a focusing actuator in the optical pickup 40 based upon a focusing error which is detected from returned light of the DVD-purpose laser beam 30 reflected from the semi-transparent reflection layer 18 (see Fig. 2) so as to displace the objective lens 24 along the axial direction thereof, so that the focus servo 46 focus-controls the DVD-purpose laser beam 30 on the semi-transparent reflection layer 18 (see Fig. 2) of the optical disk 10. During the simultaneous recording/image reproducing operation, a tracking servo 48 drives a tracking actuator in the optical pickup 40 based upon a tracking error which is detected from returned light of the DVD-purpose laser beam 30 reflected from the semi-transparent reflection layer 18 so as to displace the objective lens 24 along a disk radial direction, so that the tracking servo 48 tracking-controls the DVD-purpose laser beam 30 with respect to the wobble groove 14 (see Fig. 2) of the optical disk 10. A stepping motor 50 is driven by a motor driver 52 so as to rotate a feed screw 54, so that the optical pickup 40 is transported along the disk radial direction. This transport control operation is performed by driving a motor driver 52 via the system control unit 44 in such a manner that a remaining error of the tracking errors becomes zero. It should also be noted that although the data recording operation and the image drawing operation of the optical disk 10 are carried out from the inner peripheral side of the optical disk 10 to the outer peripheral side thereof, these operations may be conversely carried out from the outer peripheral side to the inner peripheral side thereof.

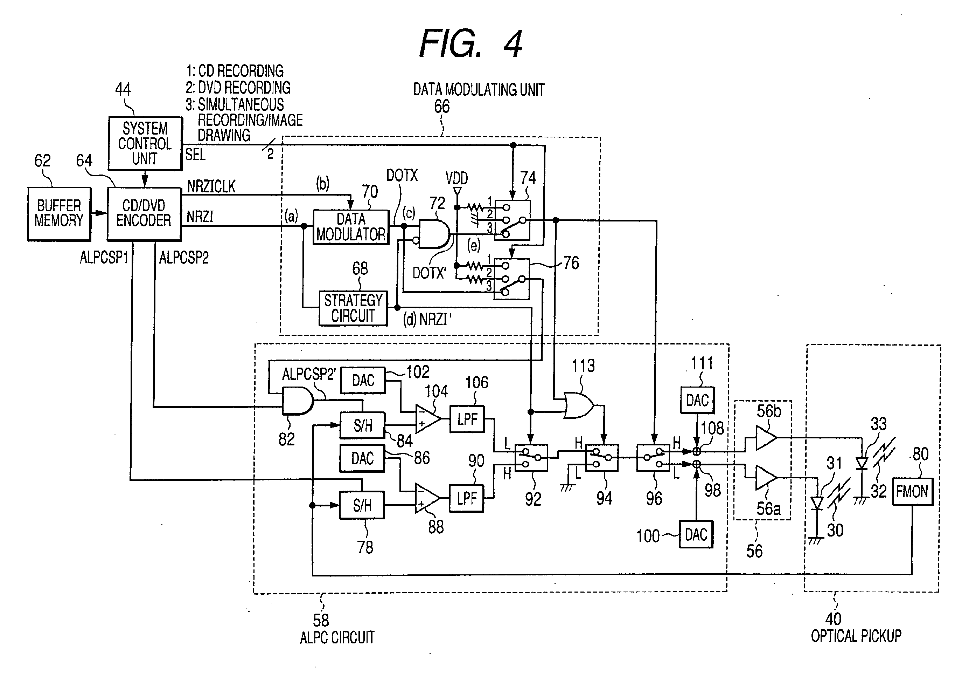

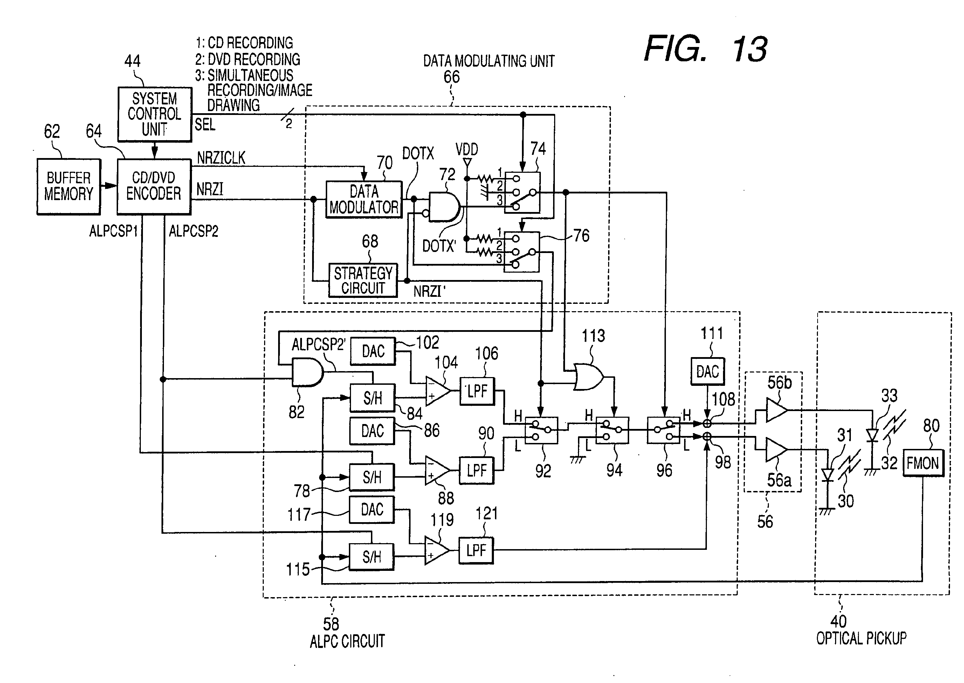

A laser driver 56 drives a DVD-purpose laser diode 31 and a CD-purpose laser diode 33 (refer to Fig. 4 and Fig. 13) respectively provided in the optical pickup 40 so as to apply the DVD-purpose laser beam 30 and the CD-purpose laser beam 32. During the simultaneous recording/image drawing operation, the laser driver 56 modulates the DVD-purpose laser beam 30 based upon a data recording signal in recording power and bottom power, and also, modulates the CD-purpose laser beam 32 based upon an image drawing signal in image drawing power and bottom power. At this time, the recording power and the bottom power of the DVD-purpose laser beam 30, and the recording power and the bottom power of the CD-purpose laser beam 32 are set respectively in accordance with, for example, the below-mentioned power modes:
(a) The DVD-purpose laser beam 30:
   · Recording power: In such a power under which pits are formed in the data recording layer 16, for example, 30 mW.
   · Bottom power: In such a power under which no pit is formed (land is formed) in the data recording layer 16, for instance, which is lower than the DVD reproducing power, and is approximated to 0 mW when the DVD-purpose laser diode 31 is driven by a threshold current (bias current).
(b) The CD-purpose laser beam 32:
   · Image drawing power: In such a power under which the visible light characteristic of the image drawing layer 22 is changed, for instance, 40 mW.
   Bottom power: In such a power under which the visible light characteristic of the image drawing layer 22 is not changed, for example, which is lower than the CD reproducing power, and is approximated to 0 mW when the CD-purpose laser diode 33 is driven by a threshold current (bias current).

An ALPC circuit 58 controls the laser power (namely, recording power and bottom power during data recording operation; reproducing power during data reproducing operation) of the DVD-purpose laser beam 30 to become values instructed by the system control unit 44. Also, the ALPC circuit 58 controls the laser power (namely, image drawing power and bottom power during image drawing operation; recording power and bottom power during data recording operation; reproducing power during data reproducing operation) of the CD-purpose laser beam 32 to become power values instructed by the system control unit 44.

During the simultaneous recording/image drawing operation, both recording data and image data are transmitted in a parallel mode from the host apparatus 36 in a time divisional manner, or the like. The image data corresponds to a set of data (pixel data) indicative of gradation (namely, monochromatic 2 gradation in this embodiment) for each of pixels of an image to be drawn. In the embodiment, a drawing dimension of 1 pixel on the optical disk 10 is defined by an a track pitch specified by the wobble groove 14 in the disk radial direction, and is defined as a constant length (namely, 1/48 physical sector length of DVD data recording in below-mentioned example) in the disk circumferential direction irrespective of a disk radial position. The recording data and the image data transmitted from the host apparatus 36 are received by an interface 60 of the optical disk drive 34, are once stored in a buffer memory 62, and thereafter, are sequentially read out from this buffer memory 62 at a speed corresponding to a simultaneous recording/drawing speed.

During the simultaneous recording/drawing operation, an encoder 64 modulates both the recording data and the image data read from the buffer memory 62 to obtain a data recording signal having a DVD format. As will be explained later, in this embodiment, the image data is contained in an empty area of the DVD format. A data modulating unit 66 corrects a time axis of a data recording signal by a strategy circuit 68. Also, the data modulating unit 66 demodulates the image data contained in the data recording signal so as to produce a drawing signal. Furthermore, even if the produced image drawing signal is such a level for designating image drawing power, when the data recording signal is such a level for designating recording power, the data modulating unit 66 performs such a modulating process operation that the image drawing signal is temporarily returned to a level for designating bottom power. As a result, during the simultaneous recording/image drawing operation, it is possible to avoid that both the DVD-purpose laser 30 and the CD-purpose laser 32 become the high power (both recording power and image drawing power) at the same time.

The data recording signal whose time axis is corrected by the data modulating unit 66 drives the DVD-purpose laser diode 31 in the optical pickup 40 via the ALPC circuit 58 and the laser driver 56 so as to record data on the data recording layer 16 of the optical disk 10. Also, the image drawing signal which is produced and modulated based upon the data recording signal (whose time axis is corrected) drives the CD-purpose laser diode 33 in the optical pickup 40 via the ALPC circuit 58 and the laser driver 56 so as to draw an image on the image drawing layer 22 of the optical disk 10 by the monochromatic 2 gradation manner. As previously described, the simultaneous recording/drawing operation can be realized. At this time, since the image drawing signal is modulated by the data recording signal (whose time axis is corrected), it is possible to avoid that the power of both the DVD-purpose laser beam 30 and the CD-purpose laser beam 32 becomes the high power (namely, recording power and image drawing power) at the same time.

### <DETAILED ARRANGEMENT 1 OF OPTICAL DISK RECORDING APPARATUS>

A detailed arrangement of the optical disk recording apparatus of Fig. 3 is shown in Fig. 4. A first description is made of the encoder 64. When a DVD recording operation is performed (during simultaneous recording/image drawing operation and sole DVD data recording operation), the encoder 64 encodes recording data in a DVD format. When a simultaneous recording/image drawing operation is performed, a process operation for embedding image data into an empty area of the DVD format is also carried out. It should be understood that since the encoder 64 has a function of a CD encoder, when a CD recording operation is performed, this encoder 64 encodes the recording data to a CD format.

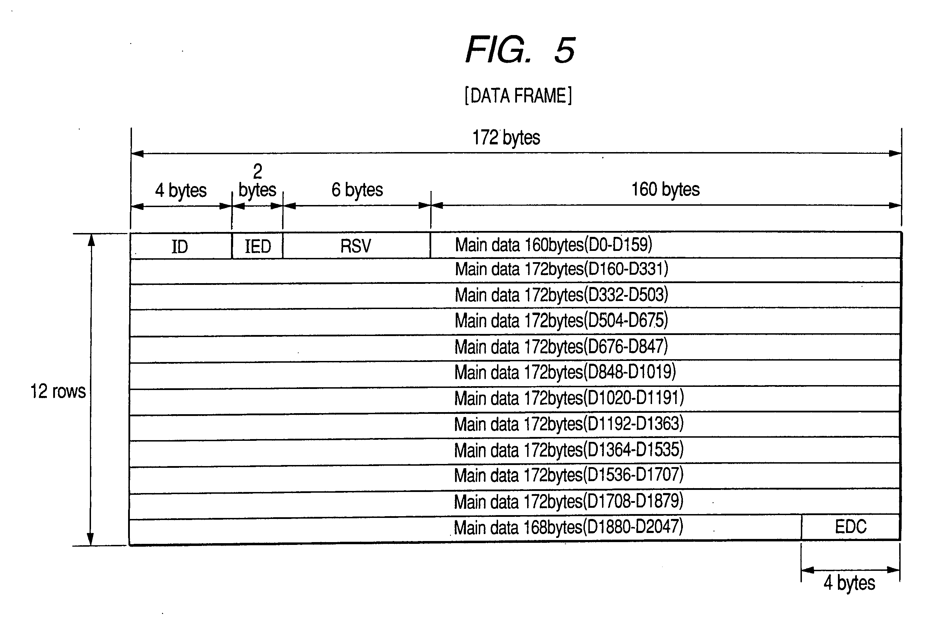

A description is made of an encoding process operation during simultaneous recording/drawing operation. Fig. 5 indicates a structure of a data frame based upon the DVD format. As represented in this drawing, in the DVD format, 1 data frame is formed by collecting 12 rows of 172 bytes. Symbol "ID" indicates identification data which is constituted by codes indicative of a physical sector number and an area name as to data to be recorded. Symbol "IED" shows an error detecting parity of "ID", symbol "RSV" indicates system reservation data, and "EDC" represents an error detecting parity of an entire data frame. Normally, since the RSV area is not used, image data is stored in this RSV area in this embodiment. Since the RSV area is constructed of 6 bytes, such an information having 6 X 4 = 48 bits can be entered. In this embodiment, since an image is drawn by the monochromatic 2 gradation, image data for 1 pixel is expressed by 1 bit. Accordingly, image data for 48 pixels are entered into 1 data frame.

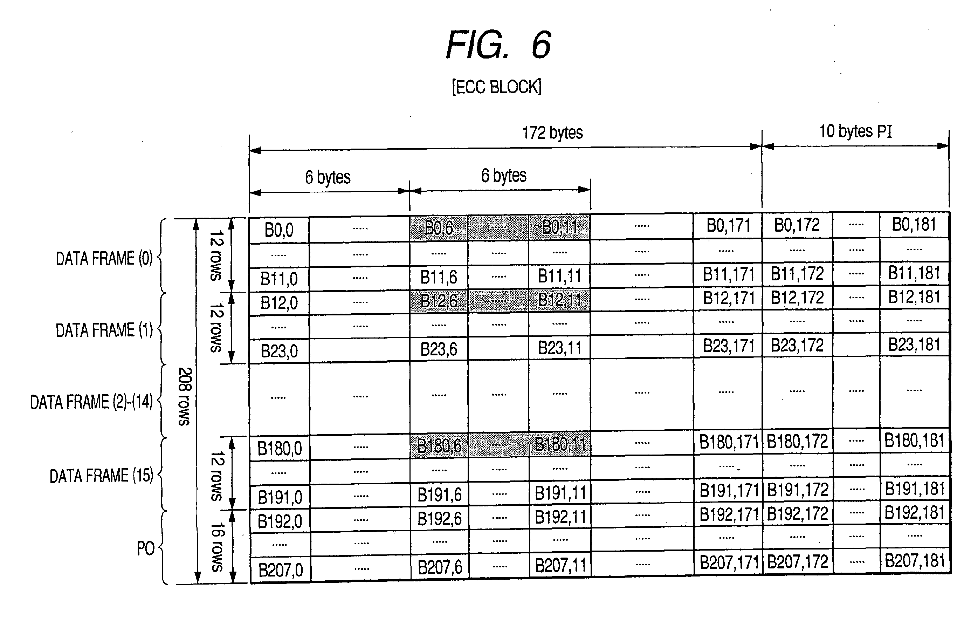

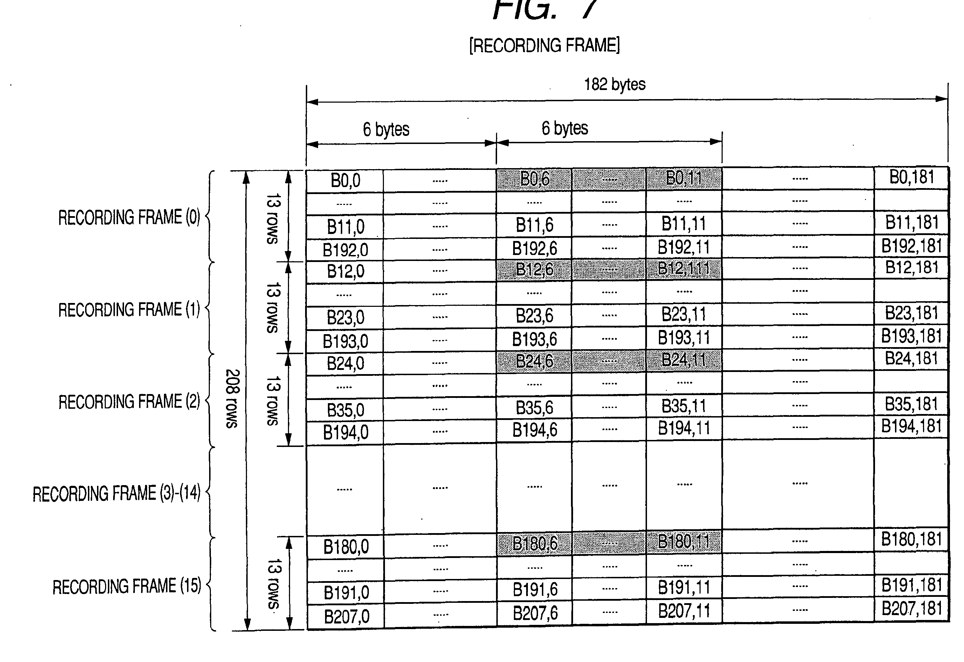

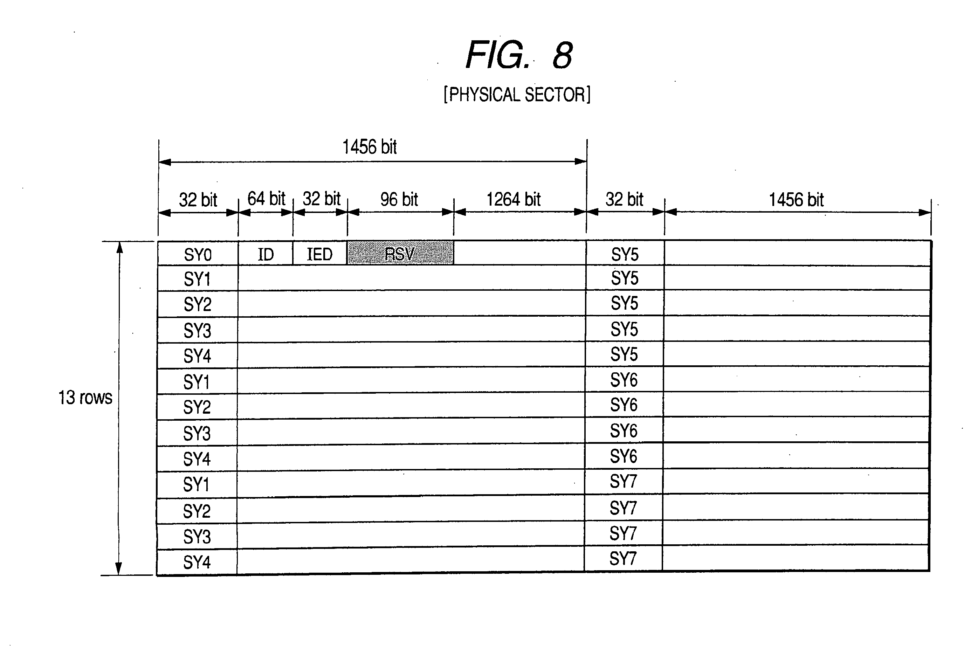

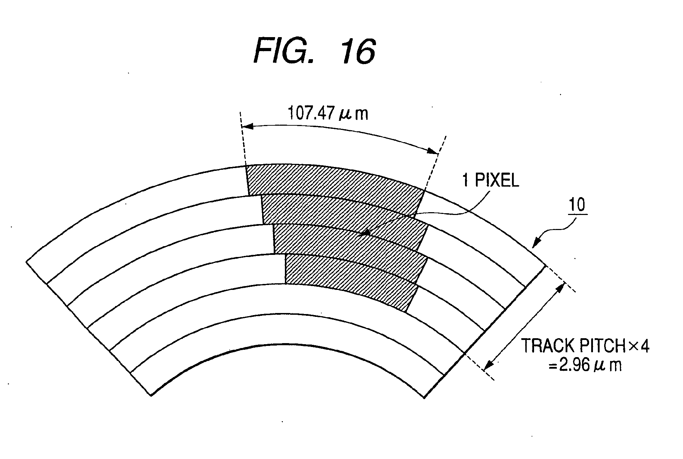

The encoder 64 scrambles only 2048 bytes of main data contained within the above-described data frame. Next, 16 pieces of the scrambled data frames are combined with each other, and a PI (Parity of Inner-code) and a PO (Parity of Outer-code) are added to the combined data frames so as to form a single ECC block. A structure of an ECC block is shown in Fig. 6. The RSV area where the image data is present is located in portions indicated by mesh lines in Fig. 6, while 6 X 16 = 96 bytes of the RSV areas are present within the 1 ECC. The encoder 64 further interleaves this ECC block. As a result, as represent in Fig. 7, 16 pieces of recording frames can be formed. In each of the recording frames, the RSV areas contain therein portions indicated by mesh lines in Fig. 7. The encoder 64 performs an 8-16 modulation with respect to each of the recording frames, and further, adds synchronous codes (SY0 to SY7) to the 8-16 modulated recording frame so as to form such a physical sector shown in Fig. 8. The physical sector is constituted by 13 X 2 X (32 + 1456) = 38,688 bits.

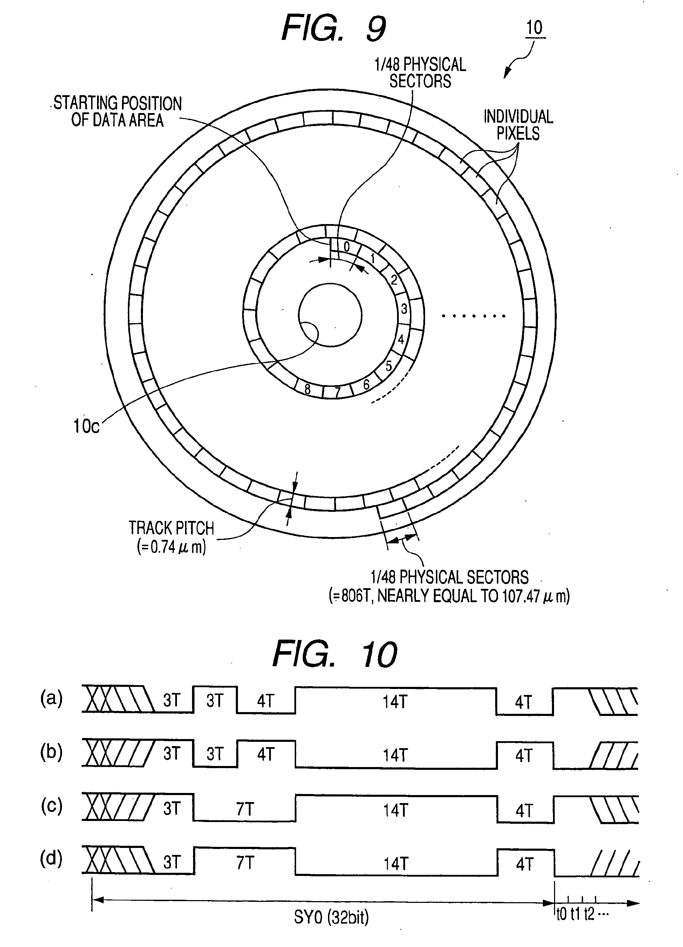

Fig. 9 schematically shows an array example of pixels which constitute one sheet of image to be drawn in the image drawing layer 22 of the optical disk 10. Reference numeral "10c" indicates a center hole of the optical disk 10. The respective pixels of 0, 1, 2, 3, ---, which constitute 1 sheet of image are sequentially arrayed in a spiral shape from a starting position (namely, radial position of 24 mm) of the data area of the data recording layer 16 based upon a size of 1/48 physical sectors (= 806T, nearly equal to 107.47 µm) along the disk circumferential direction, and a track pitch size (0.74 µm) by the wobble groove 14 along the disk radial direction. As a consequence, the host apparatus 36 forms image data (monochromatic 2 gradation data) of the respective pixels of 0, 1, 2, 3, --- by this pixel array in advance prior to a commencement of the simultaneous recording/drawing operation (otherwise, in parallel with simultaneous recording/drawing operation), and then, sequentially transfers the formed image data in combination with the recording data to the optical disk drive 34 in accordance with the progress of the simultaneous recording/drawing operation. Then, the encoder 64 of the optical disk drive 34 embeds the image data of the respective pixels 0, 1, 2, 3, ---, into the RSV areas of the relevant physical sector of the DVD format in such a manner that the respective pixels 0, 1, 2, 3, ---, are drawn at predetermined positions shown in Fig. 9 during the simultaneous recording/drawing operation. In this embodiment, such an image data for 48 pixels is embedded within 1 physical sector (refer to Fig. 8), which are drawn in this 1 physical sector.

Referring back to Fig. 4, when the simultaneous recording/image drawing operation is carried out, both a data recording signal "NRZI" (refer to Fig. 1(a)) and a clock signal "NRZICLK" (refer to Fig. 1(b)) are outputted from the encoder 64. The data recording signal NRZI is finally formed by NRZI-modulating the DVD format data into which the image data is embedded, while the "NRZI"-modulation implies a "Non-Return to Zero Inverted" modulation. The above-described clock signal NRZICLK corresponds to such a clock signal having a time period of 1 T, which is formed based upon a wobble signal detected from the returned light of the DVD-purpose laser beam 30. The encoder 64 executes an encoding process operation based upon the clock signal NRZICLK. It should also be understood that the spindle control operation (CLV control operation) by the spindle servo 42 of Fig. 3 during the simultaneous recording/drawing operation is carried out in a PLL control mode in such a manner that the wobble signal detected from the returned light of the DVD-purpose laser beam 30 is synchronized with a predetermined crystal oscillated clock. As a consequence, when the simultaneous recording/drawing operation is performed, the encoding operation by the encoder 64 is synchronized with the rotating operation of the spindle motor 38.

A description is made of the data modulating unit 66 of Fig. 4. It should also be understood that operation waveforms of the respective units shown by (a) to (e) within the modulating unit 66 of Fig. 4 are represented in Fig. 1 respectively during the simultaneous recording/drawing operation. The strategy circuit 68 performs a time axis correction of the data recording signal NRZI in order to reduce jitter components, and thus, forms a data recording signal NRZI' whose time axis is corrected. It should also be understood that although the waveform of the signal NRZI is identical to the waveform of the signal NRZI' for the sake of convenience, the waveform of the signal NRZI' is actually corrected in the time axis with respect to the waveform of the signal NRZI. The DVD-purpose laser beam 30 is modulated by this data recording signal NRZI' whose time axis is corrected, so that a data recording operation is carried out. In other words, an "H" level of this data recording signal NRZI' constitutes such an instruction that the DVD-purpose laser beam 30 is driven in the recording power, whereas an "L" level thereof constitutes such an instruction that the DVD-purpose laser beam 30 is driven in the bottom power. The data converter 70 demodulates the image data for 48 pixels which is contained in the RSV area of the data recording signal NRZI so as to produce such an image drawing signal DOTX whose level is changed to an "H" level and an "L" level for each time equivalent to 1 pixel length (= 1/48 physical sector length) in response to gradation of a pixel to be drawn. The "H" level of the image drawing signal DOTX instructs laser power for changing the visible light characteristic of the image drawing layer 22, whereas the "L" level of the image drawing signal DOTX instructs laser power which does not change the visible light characteristic of the image drawing layer 22.

A description is made of a method for detecting image data from the data recording signal NRZI by the data converter 70. A waveform pattern of a synchronous code SY0 (namely, synchronous code of head of physical sector, refer to Fig. 8) which is contained in the data recording signal NRZI becomes any one of Fig. 10A to Fig. 10D. At timing when these patterns appear is only when the synchronous code SY0 appears. Just after this synchronous code SY0 of 32 bits is detected, as indicated in this drawing, numbering of t0, t1, t2, ---, is performed for every basic time period "T." As a result, an RSV area having 96 bits (image data for 48 pixels is contained which is drawn in 1 physical sector length) is present from t96 up to t192. As a consequence, the data converter 70 detects data recording signals of the times t96 to t192 and decodes the detected data recording signals so as to form an image drawing signal DOTX for 48 pixels which is drawn in 1 physical sector length.

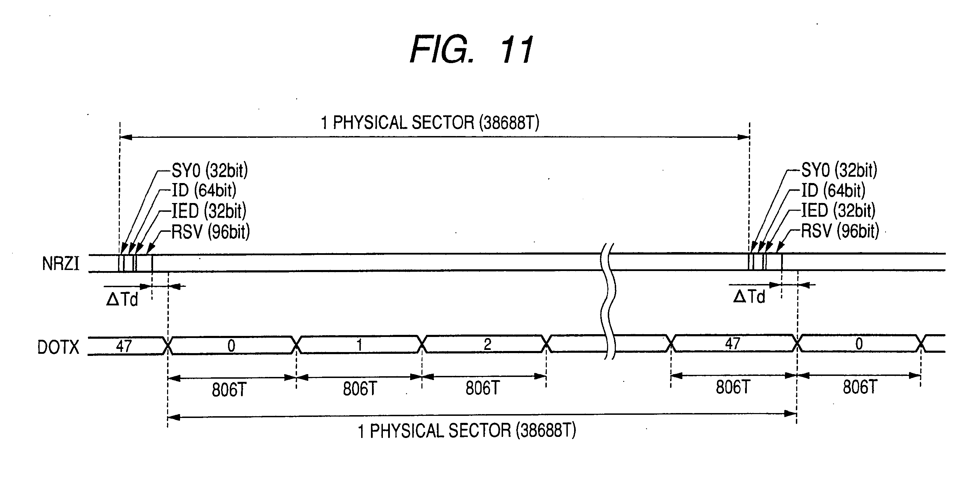

Fig. 11 shows a temporal relationship between the data recording signal NRZI and the image drawing signal DOTX. When the image data for 48 pixels to be drawn in 1 physical sector is detected in the RSV area of the data recording signal NRZI, the data converter 70 sequentially outputs the image drawing signal DOTX for 48 pixels for every time (806T) of 1/48 physical sectors after a predetermined process time "ΔTd" required in this data converter 70 is delayed. In this embodiment, since each of the pixels is drawn in the monochromatic 2 gradation, an image drawing signal DOTX for 1 pixel keeps either an "H" level (instruct laser power capable of changing visible light characteristic of image drawing layer 22) or an "L" level (instruct laser power which doe not change visible light characteristic of image drawing layer 22) for the allocated time (806T) of the 1/48 physical sectors.

In the data modulating unit 66 of Fig. 4, both the image drawing signal DOTX and an inverted signal as to the data recording signal NRZI' whose time axis is corrected are inputted to an AND circuit 72. As a result, when the data recording signal NRZI' whose time axis is corrected is in an "H" level (laser power for forming pit is designated) as to a section of the "H" level (instruct laser power for changing visible light characteristic of image drawing layer 22) of the image drawing signal DOTX, such an image drawing signal DOTX' (see Fig. 1) that the level of the image drawing signal DOTX is temporarily lowered to the "L" level (instruct laser power which does not change visible light characteristic of image drawing layer 22) is outputted from the AND circuit 72. The CD-purpose laser beam 32 is modulated by this image drawing signal DOTX' so as to perform an image drawing operation. In other words, the "H" level of the image drawing signal DOTX' constitutes such an instruction that the CD-purpose laser beam 32 is driven in the image drawing power, whereas the "L" level of the image drawing signal DOTX' constitutes such an instruction that the CD-purpose laser beam 32 is driven in the bottom power.

It should also be noted that a unit length (namely, length of 1 pixel along disk circumferential direction) of an image drawing signal DOTX is equal to the 1/48 physical sectors (806T), whereas a pit length and a land length of a data recording signal NRZI are equal to 3T through 14T, so that plural pulses of the data recording signals NRZI may be entered per unit length of the image drawing signal DOTX. Similarly, plural pulses of data recording signals NRZI' whose time axis is corrected may be entered per unit length of the image drawing signal DOTX. As a consequence, within such a section that the signal level of the image drawing signal DOTX is the "H" level, when the signal level of the data recording signal NRZI' is the "H" level, even if the "H" level of the image drawing signal DOTX is temporarily decreased to an "L" level so as to constitute an image drawing signal DOTX', there is no opportunity that the signal level of the image drawing signal DOTX' is not decreased to the "L" level over an entire section where 1 pixel is drawn (namely, image drawing signal DOTX' constitutes such a signal obtained by pulse-dividing image drawing signal DOTX having "H" level by data recording signal NRZI'). As a consequence, even if the image is drawn based upon the image drawing signal DOTX' modulated based upon the data recording signal NRZI', there is no opportunity that the image is drawn while a partial pixel is dropped. Also, since a length of 1 pixel along the disk circumferential direction is very short, even when the respective pixels are drawn based upon such image drawing signals DOTX' which are modulated (pulse-divided) by the data recording signals NRZI', the individual pixel is still merely recognized as a single point with respect to human eyes. Moreover, an averaged duty of the data recording signal NRZI' is approximately 50%, and, within the section where the signal level of the image drawing signal DOTX is the "H" level, an averaged duty of the image drawing signal DOTX' which constitutes the inverted pattern of the data recording signal NRZI' is also equal to approximately 50%. As a result, the respective pixels can be drawn in the same density.

Switches 74 and 76 are switched by a selection signal SEL supplied from the system control unit 44 in response to a recording mode. In other words, when the sole CD data recording operation is performed, each of the switches 74 and 76 is connected to a contact "1"; when the sole DVD data recording operation is performed, each of the switches 74 and 76 is connected to a contact "2"; and when the simultaneous recording image-drawing operation is performed, each of the switches 74 and 76 is connected to a contact "3". When the switch 74 is being connected to the contact "1", this switch 74 outputs an "H" level signal in a continuous manner; when the switch 74 is being connected to the contact "2", this switch 74 outputs an "L" level signal in a continuous manner; and when the switch 74 is being connected to the contact "3", this switch 74 outputs the image drawing signal DOTX' modulated by the data recording signal NRZI'. When the switch 76 is being connected to the contacts "1" and "2", this switch 76 outputs an "H" level signal in a continuous manner, whereas when the switch 76 is being connected to the contact "3", this switch 76 outputs the image drawing signal DOTX.

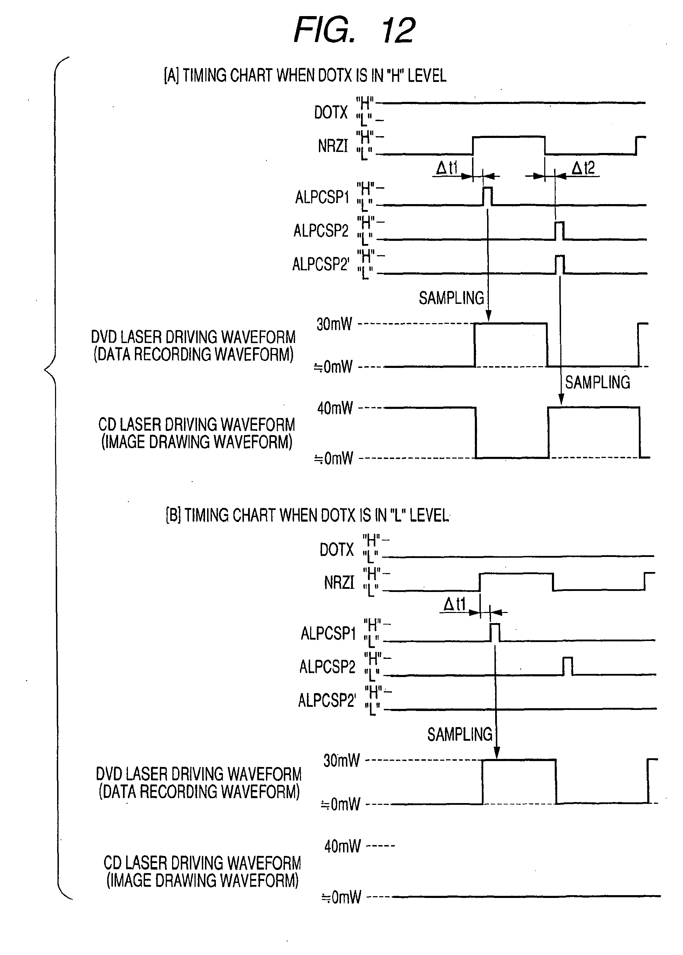

A description is made of the ALPC circuit 58 of Fig. 4. Figs. 12A and 12b represent sampling operations of laser power in the ALPC circuit 58. Fig. 12A indicates a sampling operation when the signal level of the image drawing signal DOTX is in "H" level during the simultaneous recording/drawing operation; and Fig. 12B indicates a sampling operation when the signal level of the image drawing signal DOTX is in "L" level during the simultaneous recording/drawing operation. Sampling pulses ALPCSP1 and ALPCSP2 are outputted from the encoder 64. The sampling pulse ALPCSP1 is outputted after a predetermined time "Δt1" (Δt1 is time during which laser power becomes stable) from a rising edge of the data recording signal NRZI. The sampling pulse ALPCSP2 is outputted after a predetermined time "Δt2" (Δt2 is time during which laser power becomes stable. Alternatively, it is possible to set Δt1 = Δt2) from a falling edge of the data recording signal NRZI.

In the ALPC circuit 58 of Fig. 4, a sample and hold circuit 78 samples recording power of the DVD-purpose laser beam 30 by employing the sampling pulse ALPCSP1, while this recording power is detected by a front monitor 80 (which is commonly used by both laser beam 30 and 32) in the optical pickup 40 during simultaneous recording/drawing operation. During the simultaneous recording/drawing operation, both the image drawing signal DOTX and the sampling pulse ALPCSP2 are inputted to an AND circuit 82. As a result, the AND circuit 82 produces such a signal ALPCSP2' which causes the sampling pulse ALPCSP2 to pass therethrough when the image drawing signal DOTX is in an "H" level. The sample and hold circuit 84 samples image drawing power of the CD-purpose laser beam 32 detected by the front monitor 80 by using the sampling pulse ALPCSP2'. Since the power of the CD-purpose laser beam 32 is set to the bottom power of 0 mW (namely, CD-purpose laser beam 32 is not substantially turned ON) when the signal level of the image drawing signal DPTX is in an "L" level, this CD-purpose laser beam 32 cannot be sampled. As a consequence, while the sampling pulse ALPCSP2 is masked by the AND circuit 82, no sampling operation is carried out.

When the simultaneous recording/drawing operation is carried out, a target value of recording power (for example, 30 mW) of the DVD-purpose laser beam 30 is outputted from a DAC (D/A converter) 86. A subtracting device 88 outputs a deviation value between the target value of the recording power and the sample and hold value. This deviation signal is smoothed by an LPF (low-pass filter) 90. An output signal of the LPF 90 is supplied via switches 92, 94, and 96 to an adding point 98 so as to be added therein to a bottom power instruction value outputted from a DAC (D/A converter) 100. This bottom power instruction value corresponds to, for instance, such a power instruction value of substantially 0 mW when the DVD-purpose laser diode 31 is driven by a threshold current. The added output signal is amplified by a laser driver 56a so as to drive the DVD-purpose laser diode 31 by the amplified output signal. As a result, the recording power of the DVD-purpose laser beam 30 is controlled in a servo loop in such a manner that this recording power is made coincident with the target value of the recording power set by the DAC 86, so that pits are formed in the data recording layer 16 by employing this recording power.

When the simultaneous recording/drawing operation is carried out, a target value of image drawing power (for example, 40 mW) of the CD-purpose laser beam 32 is outputted from a DAC (D/A converter) 102. A subtracting device 104 outputs a deviation value between the target value of the image drawing power and the sample and hold value. This deviation signal is smoothed by an LPF (low-pass filter) 106. An output signal of the LPF 106 is supplied via the switches 92, 94, and 96 to an adding point 108 so as to be added therein to a bottom power instruction value outputted from a DAC (D/A converter) 111. This bottom power instruction value corresponds to, for instance, such a power instruction value of substantially 0 mW when the CD-purpose laser diode 33 is driven by a threshold current. The added output signal is amplified by a laser driver 56b so as to drive the CD-purpose laser diode 33 by the amplified output signal. As a result, the recording power of the CD-purpose laser beam 32 is controlled in a servo loop in such a manner that this image drawing power is made coincident with the target value of the image drawing power set by the DAC 102, so that the visible light characteristic of the image drawing layer 22 is changed by this image drawing power so as to perform an image drawing operation.

A description is made of operations of the switches 92, 94, and 96 during the simultaneous recording/drawing operation. The switch 92 is switched by the data recording signal NRZI'. In other words, when the signal level of the data recording signal NRZI' is in "H" level (pit forming instruction), the switch 92 selectively outputs a recording power drive signal of the DVD-purpose laser beam 30 outputted from the LPF 90. Also, when the signal level of the data recording signal NRZI' is in "L" level (land forming instruction), the switch 92 selectively outputs an image forming power drive signal of the CD-purpose laser beam 32 outputted from the LPF 106. The switch 94 is switched by the image drawing signal DOTX' and the data recording signal NRZI' outputted from the OR circuit 113. That is to say, when any one of the image drawing signal DOTX' and the data recording signal NRZI' is in "H" level (pit forming instruction, or image drawing instruction), the switch 94 selectively outputs the output signal of the switch 92. Also, when both the image drawing signal DOTX' and the data recording signal NRZI' are in "L" levels (land forming instruction and no image drawing instruction), the switch 94 selectively outputs the "L" level signal. The switch 96 is switched by the image drawing signal DOTX'. In other words, when the signal level of the image forming signal DOTX' is in "H" level (image drawing instruction), this switch 96 supplies the output signal from the switch 94 as a drive signal of the CD-purpose laser beam 32. Also, when the signal level of the image forming signal DOTX' is in "L" level (no image drawing instruction), this switch 96 supplies the output signal from the switch 94 as a drive signal of the DVD-purpose laser beam 30.

Since the switches 92, 94, and 96 are operated in accordance with the above-described switching operations, both the laser beam 30 and 32 are controlled as follows when the simultaneous recording/drawing operation is carried out:
(a) When the signal level of the image drawing DOTX is the "L" level (no image drawing instruction):
   · The DVD-purpose laser 30 is driven by the recording power when the data recording signal NRZI' is in the "H" level, and is driven by the bottom power when the recording signal NRZI' is in the "L" level.
   · The CD-purpose laser 32 is driven by the bottom power.
(b) When the signal level of the image drawing DOTX is the "H" level (image drawing instruction):
   The DVD-purpose laser 30 is driven by the recording power when the data recording signal NRZI' is in the "H" level, and is driven by the bottom power when the data recording signal NRZI' is in the "L" level.
   The CD-purpose laser 32 is driven by the image drawing power when the data recording signal NRZI' is in the "L" level, and is driven in the bottom power when the data recording signal NRZI' is in the "H" level. As a consequence, there is no such an opportunity that both the DVD-purpose laser beam 30 and the CD-purpose laser beam 32 are driven at the same time by the high power (namely, both recording power and image drawing power).

It should also be noted that in the structural example of Fig. 4, since the bottom power value of the DVD-purpose laser beam 30 is set to substantially 0 mW, both the focusing error and the tracking error cannot be detected at the timing of the bottom power. Therefore, both the focusing control operation and the tracking control operation employ the averaged value servo (for example, average in several msec to several tens msec).

### <DETAILED ARRANGEMENT 2 OF OPTICAL DISK RECORDING APPARATUS>

Although the bottom power of the DVD-purpose laser 30 is controlled without a servo loop in Fig. 4, the bottom power may be alternatively controlled by forming the servo loop. Fig. 13 shows a detailed arrangement of an optical disk recording apparatus having the above arrangement. It should be noted that the same reference numerals shown in Fig. 4 will be employed as those for denoting similar structural elements of Fig. 13. In an ALPC circuit 58 of Fig. 13, a sample and hold circuit 115 samples bottom power of DVD-purpose laser beam 30 detected by the front monitor 80 based upon a sampling pulse ALPCSP2 when a simultaneous recording/image drawing operation is carried out. During the simultaneous recording/image drawing operation, a target value of bottom power (for instance, 3 mW) of the DVD-purpose laser beam 30 is outputted from the DAC 117. A subtracting device 119 outputs a deviation value between the target value of the bottom power and the sample hold value. This deviation signal is smoothed by the LPF 121. The output signal of the LPF 121 is supplied to the adding point 98. Other arrangements than the above-described arrangement and setting of a laser power value are identical to those explained in Fig. 4.

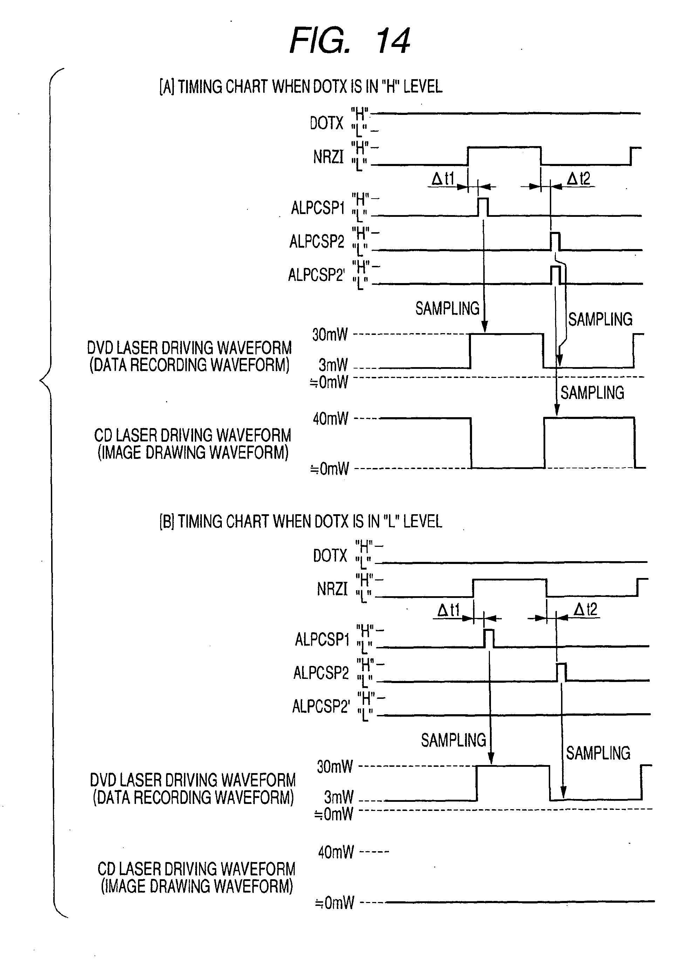

Figs. 14A and 14B represents sampling operations of laser power in the ALPC circuit 58 of Fig. 13. Fig. 14A indicates a sampling operation when the signal level of the image drawing signal DOTX is an "H" level during the simultaneous recording/drawing operation; and Fig. 14B indicates a sampling operation when the signal level of the image drawing signal DOTX is an "L" level during the simultaneous recording/drawing operation. Sampling pulses ALPCSP1 and ALPCSP2 are outputted at the same timing as that of Figs. 12A and 12B. That is to say, the sampling pulse ALPCSP1 is outputted after a predetermined time "Δt1" from a rising edge of the data recording signal NRZI. The sampling pulse ALPCSP2 is outputted after a predetermined time "Δt2" (alternatively, it is possible to set Δt1 = Δt2) from a falling edge of the data recording signal NRZI. The bottom power of the DVD-purpose laser beam 30 is sampled based upon the sampling pulse ALPCSP2 even when the signal level of the image drawing signal DOTX is either an "H" level or an "L" level. As a result, the bottom power of the DVD-purpose laser beam 30 is controlled by the servo loop in such a manner that this bottom power is made coincident with the bottom power target value set by the DAC 117.

In the structural example of Fig. 13, the bottom power value of the DVD-purpose laser beam 30 is controlled to become higher than 0 mW and is brought into the turn-ON state, so that both a focusing error and a tracking error can be detected even at the timing of the bottom power. As a consequence, in the focusing control operation and the tracking control operation, a sampling servo may also be employed in addition to the average value servo.

### <CONTROL OPERATION DURING SIMULTANEOUS RECORDING/DRAWING OPERATION>

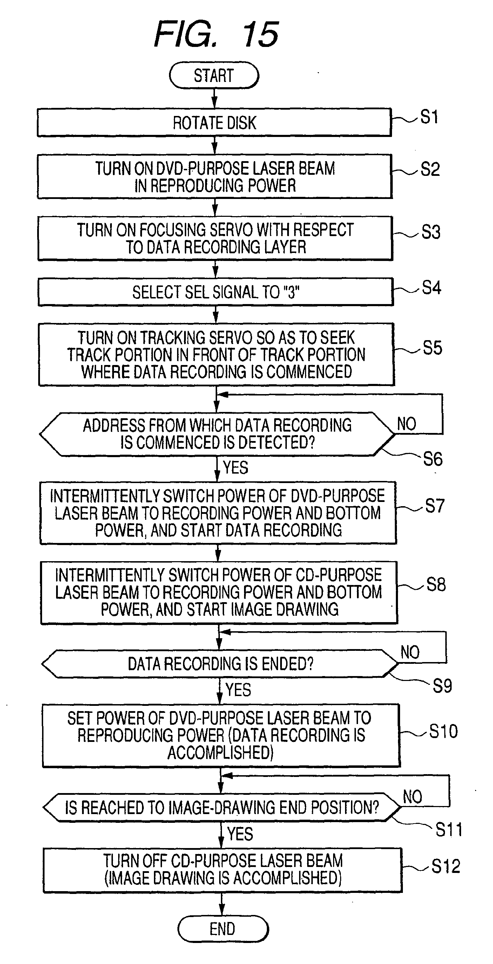

Referring now to a flow chart of Fig. 15, a description is made of control operations executed by the optical disk apparatus shown in Fig. 3, Fig. 4, and Fig. 13 when a simultaneous recording/drawing operation is carried out with respect to the above-described optical disk of Fig. 2. When the optical disk 10 is loaded on the optical disk 10 and the simultaneous recording/drawing operation is instructed, the optical disk 10 is rotated (step S1). The DVD-purpose laser beam 30 is turned on in the reproducing power (at this time, switches 94 and 96 of Fig. 4 and Fig. 13 are temporarily connected to contacts "L" sides respectively, reproducing power instruction value is outputted from DAC 100 in Fig. 4, and reproducing power instruction value is outputted from DAC 117 in Fig. 13) (step S2). The focus servo 46 is turned on so as to focus the DVD-purpose laser beam 30 onto the data recording layer 16 (step S3). A selection signal SEL="3" (Fig. 4 and Fig. 13) is outputted from the system control unit 44 (step S4) so as to connect the switches 74 and 76 to the contacts "3" respectively. The tracking servo 48 is turned on so as to seek a position located in front of a position where a data recording operation is commenced (= position where image drawing operation is commenced) by the DVD-purpose laser beam 30 (step S5). When such an address is detected at which the data recording operation is commenced (step S6), the reproducing power of the DVD-purpose laser beam 30 is switched to the recording power and the bottom power in response to the data recording signal NRZI' (see Fig. 1) (step S7). At the same time, the power of the CD-purpose laser beam 32 is switched to the image drawing power and the bottom power in response to the image drawing signal DOTX' (see Fig. 1) so as to start an image drawing operation (step S8).

If the simultaneous recording/drawing operation is progressed and then the data recording operation is accomplished (step S9), then the DVD-purpose laser beam 30 is continuously turned on in the reproducing power (reproducing power instruction value is outputted from DAC 100) (step S10), and while both a focusing control operation and a tracking control operation are carried out by employing the DVD-purpose laser beam 30, the image drawing operation is continued by employing the CD-purpose laser beam 32. Then, when the CD-purpose laser beam 32 is reached to an image-drawing end position (step S11), the CD-purpose laser beam 32 is turned off so as to complete the image drawing operation (step S12). Thereafter, a read-in area of the data recording layer 16 is recorded by the DVD-purpose laser beam 30, if necessary, and then, all of the control operations are completed.

### <MODIFICATIONS>

In the above-described embodiment, as shown in Fig. 9, the size of 1 pixel along the disk radial direction is set to the track pitch size (namely, 0.74 µm) based upon the wobble groove 14. Alternatively, this size of 1 pixel may be set to such a size defined by a plurality of track pitches. Fig. 16 shows one example in which the size of 1 pixel along the disk radial direction is set by the above-described alternative track pitch size. A meshed portion represents 1 pixel. In this alternative example, 4 pieces of track pitches (namely, 2.96 µm) are defined as the size of 1 pixel along the disk radial direction. Similar to Fig. 9, a size of 1 pixel along the disk circumferential direction is defined as the size of 1/48 physical sections (= 806T, namely nearly equal to 107.47 µm). Since the above-described alternative size definitions are employed, concentration of pixels may be changed by drawing certain pieces of the track numbers which constitute 1 pixel, and thus, an image drawing operation may be realized in monochromatic multiple gradation (in case of Fig. 16, monochromatic 5 gradation).

In the above-described embodiment, the image data is contained in the empty area of the DVD format. Alternatively, the recording data and the image data may be separately encoded, so that a simultaneous recording/drawing operation may be carried out. Alternatively, in the above-described embodiment, the spindle motor 38 is controlled in the CLV control mode so as to perform the simultaneous recording/drawing operation. Alternatively, the spindle motor 38 may be controlled in the CAV (Constant Angular Velocity) control mode so as to perform the simultaneous recording/drawing operation. In the case that the CAV control mode is employed, the spindle motor 38 is controlled in the PLL control manner in such a manner that FG pulses outputted from the spindle motor 38 of Fig. 3 are detected at a predetermined frequency. Also, in the above-described embodiment, the dimension of 1 pixel along the disk circumferential direction is defined as the constant length irrespective of the disk radial position. Alternatively, the dimension of 1 pixel along the disk circumferential direction may be defined as a constant rotation angle irrespective of the disk radial position.

In the above-described embodiment, the simultaneous recording/drawing operation is carried out by employing the image drawable write-once type DVD. Alternatively, the present invention may be applied to simultaneous recording/drawing operations as to image drawable rewritable type DVDs (DVD-RW, DVD+RW, DVD-RAM etc.), an image drawable write-once type CD (CD-R), an image drawable rewritable type CD (CD-RW), image drawable write-once type Blue-ray disks (BD-R etc.), image drawable rewritable type Blue-ray disks (BD-RW etc.), and other sorts of image drawable optical disks.

## Claims

1. An optical disk recording/drawing method comprising:
providing an optical disk that includes a data recording layer and an image drawing layer which are formed at a different position in a thickness direction of the optical disk;
rotating the optical disk;
applying a first beam through an objective lens of a single optical pickup to the optical disk so as to be focused on the data recording layer to form a pit on the data recording layer as a recording operation;
applying a second beam through the objective lens to the optical disk so as to be focused on the image drawing layer and change a visible light characteristic of the image drawing layer to form a pixel on the image drawing layer as an image drawing, simultaneously with the recording operation,
wherein when the data recording beam having power for forming the pit on the data recording layer is applied during the image drawing beam for forming the pixel of the image is applied, power of the image drawing beam is lowered from a first power that changes the visible light characteristic of the image drawing layer to a second power that does not changes the visible light characteristic of the image drawing layer.

2. The optical disk recording/drawing method according to claim 1, wherein a length of one pixel defined by image data in a disk circumferential direction is longer than a length of the plural pits formed by the first beam in the disk circumferential direction.

3. The optical disk recording/drawing method according to claim 2 further comprising:
encoding recording data for the recording operation to a recording format;
embedding image data, having plural pixels for a predetermined unit section, in a predetermined empty area of the recording format to form a data recording signal;
extracting the image data from the recording format; and
equally distributing the plural pixels of the image data for the predetermined unit section over a disk circumferential direction length corresponding to a length of the predetermined unit section to form an image drawing signal,
wherein within a section that the image drawing signal instructs to change the visible light characteristic of the image drawing layer to draw the pixel, instruction as to the image drawing signal is temporarily changed to another instruction for not changing the visible light characteristic of the image drawing layer at the time the data recording signal instructs to form the pit, and
wherein the first beam is modulated based on the data recording signal to perform the data recording operation, and the second beam is modulated based on the image drawing signal which is modulated by the data recording signal so as to form the image.

4. An optical disk recording/drawing apparatus for recording data and drawing an image on an optical disk that includes a data recording layer and an image drawing layer which are formed at a different position along a thickness direction of the optical disk, the apparatus comprising:
a rotating unit that rotates the optical disk;
an objective lens;
a first laser diode that applies a first beam through an objective lens to the optical disk so as to be focused on the data recording layer, the first beam being capable of having a power for forming a pit on the data recording layer;
a second laser diode that applies a second beam through the objective lens to the optical disk so as to be focused on the image drawing layer, the second beam being capable of having a power for changing a visible light characteristic of the image drawing layer; and
a controller that controls the first and second laser diodes to perform a data recording operation and an image forming operation simultaneously,
wherein when the controller controls the first laser diode to apply the first beam having the power for forming the pit, the controller controls the second laser diode to temporality lower the power of the second beam so as not to change the visible light characteristic.
